# EUROPEAN PATENT APPLICATION

(11) **EP 4 607 940 A1**
(43) Date of publication of application: **27.08.2025**
(21) Application number: 25157067.7
(22) Date of filing: 11.02.2025
(51) Int. Cl.: H04N 23/663

(54) **IMAGE PICKUP APPARATUS, LENS APPARATUS, AND CONTROL METHOD**

(30) Priority: 20.02.2024 JP 2024023706
(71) Applicant: CANON KABUSHIKI KAISHA, Tokyo 146-8501 (JP)
(72) Inventor: KOMATSUZAKI, Taira, Ohta-ku, Tokyo, 146-8501 (JP)
(74) Representative: TBK

(57) **Abstract**

An image pickup apparatus (200) is attachable to and detachable from an optical lens (100), and configured to acquire at least one of an image and a video. The image pickup apparatus includes a communication unit (213) configured to transmit and receive data to and from the optical lens, and a control unit (212) configured to set a priority of the data according to whether or not communication of the data satisfies a predetermined condition.

## Description

### BACKGROUND

### Technical Field

The present disclosure relates to an image pickup apparatus, a lens apparatus, and a control method.

### Description of Related Art

In the field of video (or footage) production, visual effects (VFX) are used for video expressions that are difficult to achieve using live-action video alone by combining computer graphics (CG) and live-action video. In order to obtain a high-quality combined image that is less unnatural, it is important to match the ranges of the live-action video and CG. A method that applies correction processing to CG to reproduce a video through a lens, or a method that applies correction processing to a live-action video to remove the influence through a lens may be used. Since the correction and combination are performed for each image (frame) that constitutes the video, the information that is used for the correction may be available at a frequency equal to or higher than the frame rate of the video. Japanese Patent Application Laid-Open No. 2015-130639 discloses a configuration that preferentially communicates data with a high degree of necessity by changing the communication order of data according to a lens (apparatus). Japanese Patent Application Laid-Open No. 2017-015980 discloses a configuration that reduces the time required to acquire a plurality of data by continuously transmitting the plurality of data from a lens (apparatus) to a camera (body) at a single request from the camera to the lens using a command that indicates a combination of the plurality of data and the transmission order.

In the configuration disclosed in Japanese Patent Application Laid-Open No. 2015-130639, as a data amount acquired in one cycle of communication processing increases, the data acquisition frequency decreases due to the long communication cycle, and high-frequency or highly accurate correction processing may not be available. The configuration disclosed in Japanese Patent Application Laid-Open No. 2017-015980 is silent about the communication cycle and may cause the data acquisition frequency to decrease.

### SUMMARY

The present disclosure in its first aspect provides an image pickup apparatus as specified in claims 1 to 27.

The present disclosure in its second aspect provides a lens apparatus as specified in claims 28 and 29.

The present disclosure in its third aspect provides a method for controlling an image pickup apparatus as specified in claim 30.

The present disclosure in its fourth aspect provides a method for controlling a lens apparatus as specified in claims 31 and 32.

Further features of various embodiments of the disclosure will become apparent from the following description of embodiments with reference to the attached drawings.

### BRIEF DESCRIPTION OF THE DRAWINGS

FIG. 1 is a block diagram illustrating an example configuration of a camera system according to this embodiment.
FIG. 2 is a flowchart illustrating metadata transmission processing.
FIG. 3 is a flowchart illustrating lens communication acquisition data determination processing.
FIG. 4 is a flowchart illustrating lens communication available information confirmation processing.
FIG. 5 is a flowchart illustrating data acquisition priority change processing.
FIG. 6 is a flowchart illustrating preferential acquisition data selection and determination processing.

### DETAILED DESCRIPTION

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a detailed description will be given of embodiments according to the disclosure. Corresponding elements in respective figures will be designated by the same reference numerals, and a duplicate description thereof will be omitted.

### CONFIGURATION OF IMAGE PICKUP APPARATUS

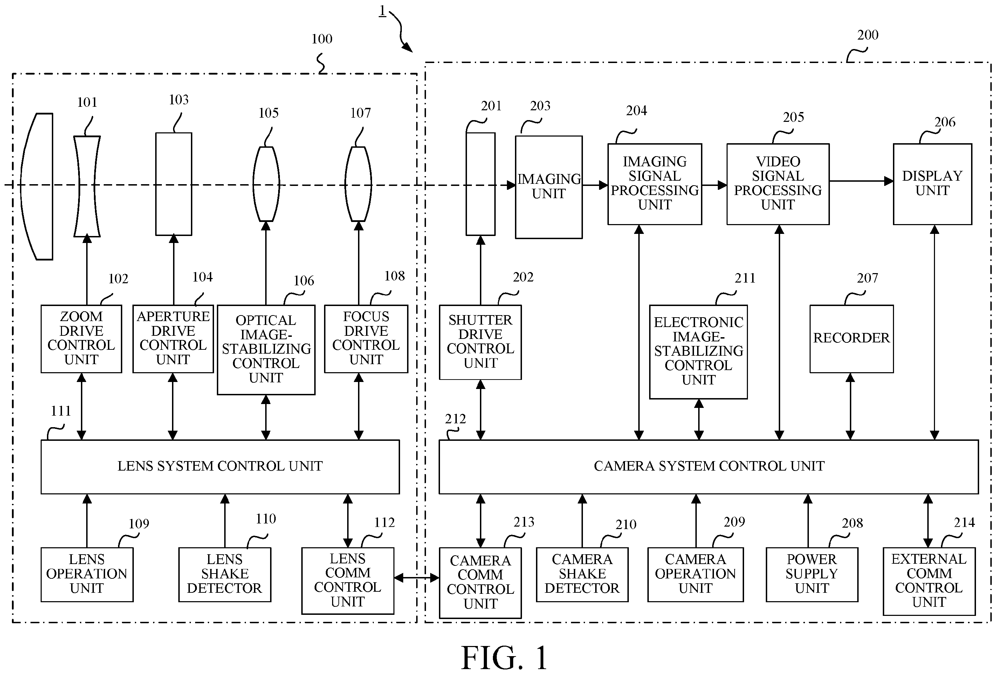

FIG. 1 is a block diagram illustrating a schematic configuration example of a lens interchangeable type digital camera for capturing still and moving images as an example camera system according to one embodiment of the present disclosure. The scope of application of the present disclosure is not limited to digital cameras, and the present disclosure is applicable to various camera systems.

A camera system 1 includes a lens unit (optical lens) 100 and a camera body (image pickup apparatus) 200 attachable to and detachable from the lens unit 100. The lens unit 100 is a lens apparatus attachable to and detachable from the camera body 200.

In the lens unit 100, a zoom unit 101 includes a zoom lens that performs magnification variation, and a zoom drive control unit 102 drives and controls the zoom unit 101. An aperture (stop) unit 103 has an aperture function, and an aperture drive control unit 104 drives and controls the aperture unit 103. An image stabilizing (IS) unit 105 includes an image stabilizing lens such as a shift lens, and an optical image-stabilizing control unit 106 drives and controls the image stabilizing unit 105. A focus unit 107 includes a focus lens that changes an in-focus position, and a focus drive control unit 108 drives and controls the focus unit 107.

A lens operation unit 109 includes operation members such as rings for operating the zoom, aperture value, and focus (optical system) of the lens, and is used by the user to operate the lens unit 100. A lens shake detector 110 detects a shake amount applied to the lens unit 100 and outputs a detection signal to a lens system control unit 111.

The lens system control unit 111 includes a central processing unit (CPU) and controls the entire lens unit 100. The lens system control unit 111 can communicate with a camera system control unit 212 in the camera body 200 via a lens communication control unit 112. The lens system control unit 111 acquires information necessary for control and information regarding the characteristic of the optical system from each member of the lens unit 100. For example, the lens system control unit 111 acquires focus operation information about the operation member that operates the focus from the lens operation unit 109. The focus operation information includes a current focus position, a manual focus direction, a manual focus operation amount, etc. Information necessary for control and information on the characteristic of the optical system are transmitted to the camera system control unit 212 via the lens communication control unit 112 and a camera communication control unit (communication unit) 213 periodically or at a request from the camera system control unit 212. The transmitted information is used for various processing in the camera body 200. The operation members for operating the zoom, aperture value, and focus in this embodiment are included in the lens operation unit 109 and are operation members provided in the lens unit 100, but this embodiment is not limited to such a configuration. For example, they may be operation members connected to the lens unit 100, or operation members provided in or connected to the camera body 200.

In the camera body 200, a shutter unit 201 controls an incident light amount that has passed through the lens unit 100 into the camera body 200. A shutter drive control unit 202 drives and controls the shutter unit 201. An imaging unit 203 includes an image sensor including a CCD, a CMOS sensor, or the like, photoelectrically converts light that has passed through the shutter unit 201, and outputs an electrical signal. In this embodiment, the image sensor receives light that has passed through different exit pupil areas in the lens unit 100, and can obtain an electrical signal corresponding to a received light amount. The image sensor can perform focus detection using a so-called imaging-surface phase-difference method based on the acquired electrical signal. The image sensor can also add and output electrical signals corresponding to light that has passed through different exit pupil areas.

An imaging signal processing unit 204 converts an electrical signal output from the imaging unit 203 into a focus detection signal and/or an imaging signal. The imaging signal processing unit 204 outputs the focus detection signal to the camera system control unit 212, and outputs the imaging signal to a video signal processing unit 205. The video signal processing unit 205 processes the imaging signal output from the imaging signal processing unit 204 according to the application. For example, image stabilization can be performed by changing a cutout position of a video signal according to a correction amount of the electronic image-stabilizing control unit 211.

A display unit 206 displays an image based on the video signal output from the video signal processing unit 205, and displays various control information by the lens system control unit 111, as necessary. A recorder 207 (recording medium) stores various data including the video information output from the video signal processing unit 205. A power supply unit 208 supplies power to the entire camera system 1 according to the application.

A camera operation unit 209 is used by the user to operate the camera system 1. The camera operation unit 209 includes a shutter release button for instructing imaging of a still image, a moving-image recording switch for instructing recording of a moving image, and a selection switch for changing imaging settings via a menu screen displayed on the display unit 206. The camera operation unit 209 outputs a signal according to the operation to the camera system control unit 212. The buttons and switches included in the camera operation unit 209 may be configured as hardware keys, soft keys, or a combination of them. The camera operation unit 209 may also include a shift button for operating a focus lens or a zoom lens.

The shutter release button is configured so that a first switch (SW1) and a second switch (SW2) are turned on in sequence according to a press amount. In a case where the user half-presses the shutter release button, the first switch SW1 is turned on, and in a case where the user fully presses the shutter release button, the second switch SW2 is turned on. In a case where the first switch SW1 is turned on, the focus drive control unit 108 drives the focus unit 107 for focusing, and the aperture drive control unit 104 drives the aperture unit 103 and sets a proper exposure amount. In a case where the second switch SW2 is turned on, image data acquired from a light image exposed to the imaging unit 203 is stored in the recorder 207.

In a case where the user presses the moving-image recording switch, a recording of a moving-image begins, and in a case where the user presses the moving-image recording switch again during recording of a moving image, recording ends. Switches for instructing the start and end of moving image recording may be provided separately.

The camera shake detector 210 detects a shake amount applied to the camera body and outputs a signal indicating a detected shake amount to the camera system control unit 212.

The camera system control unit 212 includes a CPU and controls the entire camera system 1. The camera system control unit 212 and the lens system control unit 111 communicate with each other via the camera communication control unit 213 and the lens communication control unit 112. In other words, in a case where the lens unit 100 is attached and electrically connected to the camera body 200, mutual communication (lens communication hereinafter) is performed via the lens communication control unit 112 and the camera communication control unit 213.

The camera system control unit 212 generates metadata based on information about the lens unit 100 acquired via the camera communication control unit 213 and information acquired from each component in the camera body 200. An external communication control unit 214 receives the metadata generated by the camera system control unit 212 from the camera system control unit 212. The external communication control unit 214 is connected to an arbitrary external device (not illustrated) and transmits metadata to the connected external device periodically or at a request from the external device. The metadata may be transmitted alone or may be transmitted as information combined with a video signal in a moving image format or the like to which information other than a video signal can be added. Alternatively, a generating unit that generates metadata may be separately provided, and the external communication control unit 214 may transmit the metadata from the generating unit to the external device, or the external communication control unit 214 may generate the metadata.

In this embodiment, the camera system control unit 212 functions as a determination unit that determines whether or not the communication of data transmitted and received in the lens communication satisfies a predetermined condition. The camera system control unit 212 functions as a setting unit that sets the priority of the data transmitted and received in the lens communication according to the result of the determination made by the determination unit.

### METADATA TRANSMISSION PROCESSING

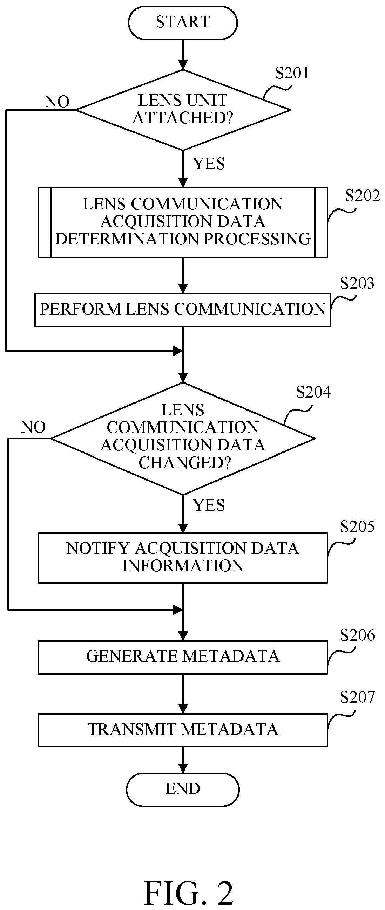

FIG. 2 is a flowchart illustrating metadata transmission processing executed by the camera system control unit 212. In this embodiment, the metadata transmission processing is executed at a predetermined cycle, so that lens communication and metadata generation and transmission are executed periodically.

In step S201, the camera system control unit 212 determines whether or not the lens unit 100 is attached to the camera body 200. In a case where the camera system control unit 212 determines that the lens unit 100 is attached to the camera body 200, it executes the processing of step S202, and in a case where it determines that the lens unit 100 is not attached to the camera body 200, it executes the processing of step S204.

In step S202, the camera system control unit 212 performs lens communication acquisition data determination processing. The lens communication acquisition data determination processing is processing for determining data to be communicated and acquired through lens communication (lens communication acquisition data hereinafter) and will be described in detail later.

In step S203, the camera system control unit 212 executes lens communication to acquire the data based on the information about the lens communication acquisition data determined in step S202.

The lens communication acquisition data determination processing performed in step S202 may be processing for determining a communication command to be sent from the camera communication control unit 213 to the lens communication control unit 112 to acquire data. In that case, in step S203, the lens communication is executed using the communication command determined in step S202, and the desired data is acquired.

In step S204, the camera system control unit 212 determines whether the lens communication acquisition data determined in step S202 has changed from the lens communication acquisition data determined one cycle earlier. In a case where the camera system control unit 212 determines that the lens communication acquisition data determined in step S202 has changed from the lens communication acquisition data determined one cycle earlier, it executes the processing of step S205, and otherwise, it executes the processing of step S206.

In step S205, the camera system control unit 212 notifies the user of a list of newly available data or data that has become unavailable (acquisition data information) by displaying it on the display unit 206 or other means. That is, the camera system control unit 212 functions as a notification unit. The lens communication acquisition data information may be reset when the lens unit 100 is detached from the camera body 200. In that case, it is recognized that there is no lens communication acquisition data while the lens unit 100 is not attached to the camera body 200. In a case where the lens communication acquisition data changes due to the detachment of the lens unit 100, the user is notified of the acquisition data information in step S205.

In step S206, the camera system control unit 212 generates metadata including the lens communication acquisition data acquired in step S203.

In step S207, the camera system control unit 212 transmits the metadata to an external device via the external communication control unit 214. The transmitted metadata is used to monitor and control the state of the camera system 1 from the outside, and to perform video processing for a video output from the camera system 1.

The processing of transmitting metadata to the external device after the metadata is generated includes transmitting the metadata to a recording medium detachably attached to the camera body 200 in order to record the metadata into the recording medium.

### LENS COMMUNICATION ACQUISITION DATA DETERMINATION PROCESSING

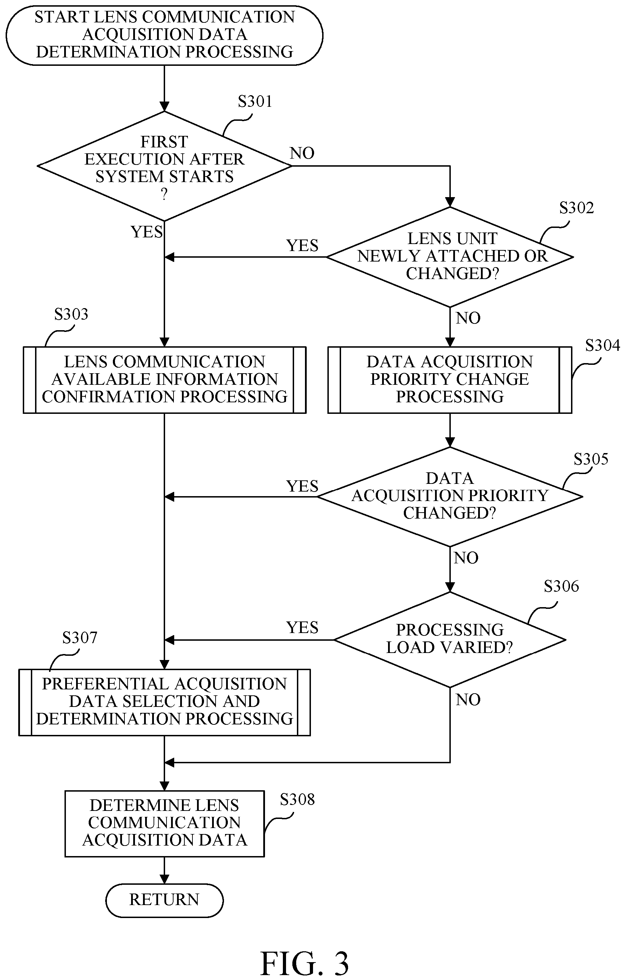

FIG. 3 is a flowchart illustrating the lens communication acquisition data determination processing executed in step S202 of FIG. 2.

In step S301, the camera system control unit 212 determines whether this is the first lens communication acquisition data determination processing after the camera system has been started. In a case where the camera system control unit 212 determines that this is the first lens communication acquisition data determination processing after the camera system has been started, it executes the processing of step S303, and otherwise, it executes the processing of step S302.

In step S302, the camera system control unit 212 determines whether a new lens unit 100 has been attached, or whether the lens unit 100 has been changed to a lens unit 100 different from the one previously attached. In a case where the camera system control unit 212 determines that a new lens unit 100 has been attached, or that the lens unit 100 has been changed to a different lens unit 100 from the previously attached one, it executes the processing of step S303, and otherwise, it executes the processing of step S304.

In step S303, the camera system control unit 212 executes lens communication available information confirmation processing. The lens communication available information confirmation processing is the processing of acquiring a list of data that can be acquired by the lens communication from the currently attached lens unit 100, or a list of communication commands that can be communicated, and details will be described later.

In step S304, the camera system control unit 212 executes data acquisition priority (order) change processing. The data acquisition priority change processing is the processing of updating data acquisition priority information that is a selection criterion for preferential acquisition data in preferential acquisition data selection and determination processing, which will be described later, based on the state of the lens unit 100 and the camera body 200, and details will be described later.

In step S305, the camera system control unit 212 determines whether a change has occurred in the data acquisition priority in step S304. In a case where the camera system control unit 212 determines that a change has occurred in the data acquisition priority, it executes the processing of step S307, and otherwise, it executes the processing of step S306.

In step S306, the camera system control unit 212 determines whether the processing load of the camera body 200 has varied. Operations that cause the processing load variation include changing a sensor mode, changing a frame rate, and changing an operating frequency among the imaging setting of the camera body 200, and starting and ending recording an image. These may cause variations in the communication cycle of lens communication and the distribution cycle of metadata in addition to the processing load of the camera body 200. In a case where the camera system control unit 212 determines that the processing load has varied, it executes the processing of step S307, and otherwise, it executes the processing of step S308.

In step S307, the camera system control unit 212 executes preferential acquisition data selection and determination processing for determining preferential acquisition data including data that is used for correction according to the optical characteristic of the lens unit 100.

In step S308, the camera system control unit 212 determines lens communication acquisition data by adding essential acquisition data to the preferential acquisition data determined in step S307. In this embodiment, the essential acquisition data is information necessary to control the zoom drive control unit 102, the aperture drive control unit 104, the optical image-stabilizing control unit 106, and the focus drive control unit 108. For example, information such as the position information, focal length, F-number, and T-number of each lens can be included. For a lens unit that does not include some units such as the zoom unit 101 and the image stabilizing unit 105 illustrated in FIG. 1, information corresponding to the configuration that is not included may be removed from the required acquisition data.

### LENS COMMUNICATION AVAILABLE INFORMATION CONFIRMATION PROCESSING

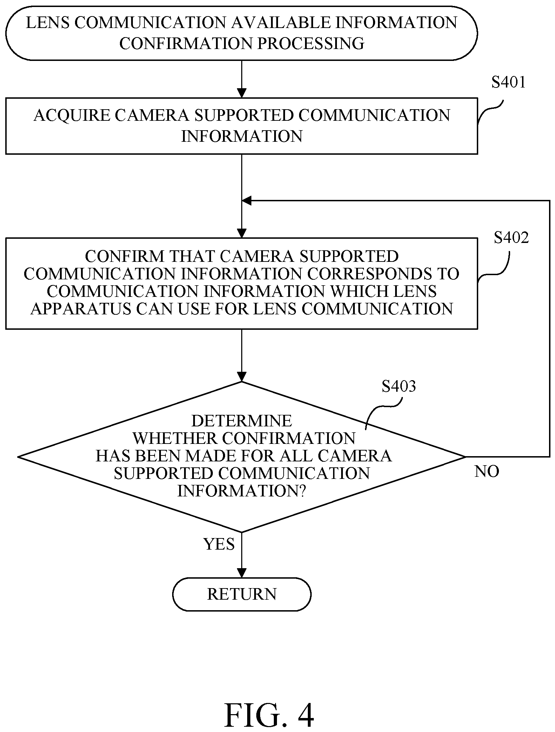

FIG. 4 is a flowchart illustrating the lens communication available information confirmation processing executed in step S303 of FIG. 3.

In step S401, the camera system control unit 212 acquires communication information (camera supported communication information) that the camera body 200 can use for lens communication.

In step S402, the camera system control unit 212 checks whether the camera supported communication information acquired in step S401 corresponds to information on communication that the lens unit 100 can use for the lens communication.

In step S403, the camera system control unit 212 determines whether the confirmation processing in step S402 has been made for all camera supported communication information. In a case where the camera system control unit 212 determines that the confirmation processing in step S402 has been made for all camera supported communication information, the flow ends, and otherwise, it executes the processing of step S402.

In step S402, this embodiment assumes a method for actually executing lens communication regarding a single predetermined communication, and confirming the communication supportability status on the lens unit 100 side based on a response from the lens communication control unit 112, but this embodiment is not limited to this example. For example, a communication command for confirming the communication supportability status may be prepared, or the communication command may be used to confirm the supportability status for a plurality of communications in a single lens communication.

As long as all the camera supported communication information acquired in step S401 can be confirmed by a single lens communication, i.e., a single execution of the processing of step S402, the processing of step S403 may be omitted.

### DATA ACQUISITION PRIORITY CHANGE PROCESSING

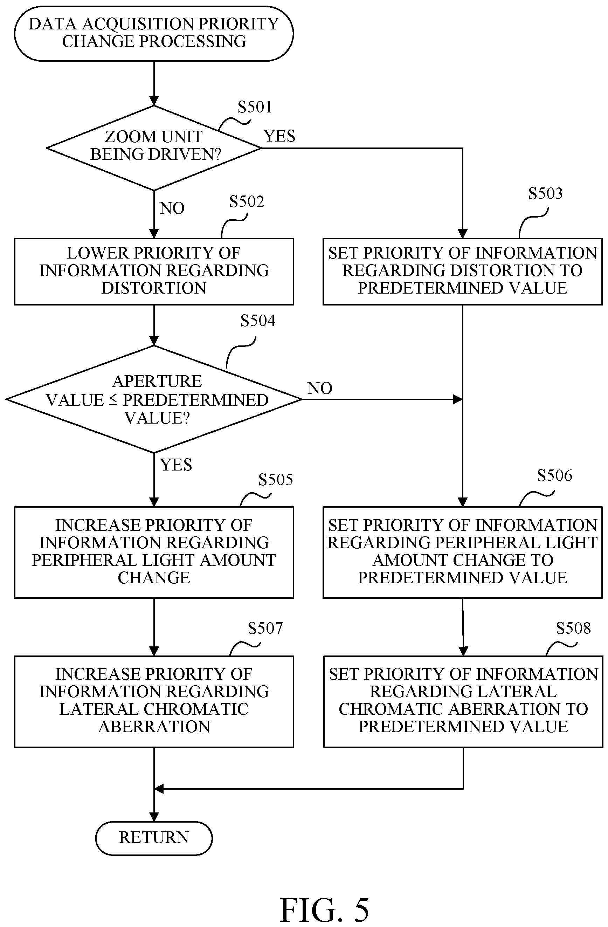

FIG. 5 is a flowchart illustrating the data acquisition priority change processing executed in step S304 of FIG. 3.

In this embodiment, first priority data and second priority data in the preferential acquisition data selection and determination processing described later are information regarding the priority (order or level) of data acquisition in the lens communication, and each includes one datum or more.

In this embodiment, the information included in the first priority data is data regarding the correction to a phenomenon in which imaging on the imaging unit 203 through the optical system changes in a direction parallel to the optical axis, among data that are used for correction according to the optical characteristic of the lens unit 100. For example, it is data that is used for correction (second correction) that involves a change in the position coordinates in a vertical direction vertical to one of an image and a video, among corrections performed for either the image or the video. The information included in the first priority data is data necessary for an alignment of an imaging range and a captured object in combining a live-action image or video with a CG image or video using VFX. For example, it is data that is used for correction (first correction) involving a change in the position coordinates of at least one of the width direction and height direction of one of the image and the video. More specifically, the information included in the first priority data is information on distortion, including a distance from a predetermined position of the optical system in the lens unit 100 to an object (object distance), an entrance pupil position, a parameter indicating the degree of distortion, and image magnification change information.

The information included in the second priority data is data regarding correction of a phenomenon in which the image quality (clarity) and color tone of the imaging on the imaging unit 203 through the optical system change, among data that is used for correction according to the optical characteristic of the lens unit 100. For example, it is data that is used for correction (third correction) involving a brightness (or luminance) change of one of an image and video, among corrections made to one of the image and video, and data that is used for correction (fourth correction) of color shift of one of the image and video, among corrections made to one of the image and video. Moreover, the information included in the second priority data is data necessary to perform processing using VFX to equalize the image quality and color tone between a live-action image or video and a CG image or video. More specifically, the information included in the second priority data is information on peripheral light amount changes, information on image magnification aberration including parameters indicating the degree of image magnification aberration, and information on longitudinal chromatic aberration.

Basically, the first priority data has a higher acquisition priority than the second priority data. Among the first priority data and the second priority data, the acquisition priority is determined in advance for one or more data included. For example, the priority of data that is used for the first correction in which at least one of the amount and rate of change in position coordinates before and after correction is larger is increased. The priority of data that is used for the second correction in which at least one of the amount and rate of change in position coordinates before and after correction is larger is increased. The priority of data that is used for the second correction is lowered relative to the priority of data that is used for the first correction. Among the data that is used for the third correction, the priority of data that is used for the third correction in which at least one of the amount and rate of a brightness change before and after the correction is larger is increased. Among the data that is used for the fourth correction, the priority of data that is used for the fourth correction in which at least one of the amount and rate of correction is larger and data that is used for the fourth correction in which at least one of the amount and rate of correction changes according to an image height is increased. The priority of the data that is used for the fourth correction is lowered relative to the data that is used for the third correction.

In step S501, the camera system control unit 212 determines whether the zoom unit 101 is being driven. In a case where the camera system control unit 212 determines that the zoom unit 101 is being driven, it executes the processing of step S503, and otherwise, it executes the processing of step S502.

In step S502, the camera system control unit 212 lowers the priority of the information regarding distortion.

In step S503, the camera system control unit 212 sets the priority of the information regarding distortion to a predetermined value. Since the priority is lowered relative to the predetermined value in step S502, the priority set in step S502 is lower than the priority set in step S503.

In step S504, the camera system control unit 212 determines whether the aperture value (F-number) is equal to or lower than a predetermined value. In a case where the camera system control unit 212 determines that the aperture value is equal to or lower than the predetermined value, it executes the processing of step S505, and otherwise, it executes the processing of step S506.

In step S505, the camera system control unit 212 increases the priority of the information regarding a peripheral light amount change.

In step S506, the camera system control unit 212 sets the priority of the information regarding the peripheral light amount change to a predetermined value. Here, in step S505, the priority is increased relative to the predetermined value, so the priority set in step S505 is higher than the priority set in step S506.

In step S507, the camera system control unit 212 increases the priority of information regarding lateral chromatic aberration.

In step S508, the camera system control unit 212 sets the priority of data related to chromatic aberration of magnification to a predetermined specified value. Here, in step S507, the priority is raised relative to the specified value, so the priority set in step S507 is higher than the priority set in step S508.

The predetermined values set in steps S503, S506, and S508 correspond individually to each piece of information, and may be different for each piece of information.

### PREFERENTIAL ACQUISITION DATA SELECTION AND DETERMINATION PROCESSING

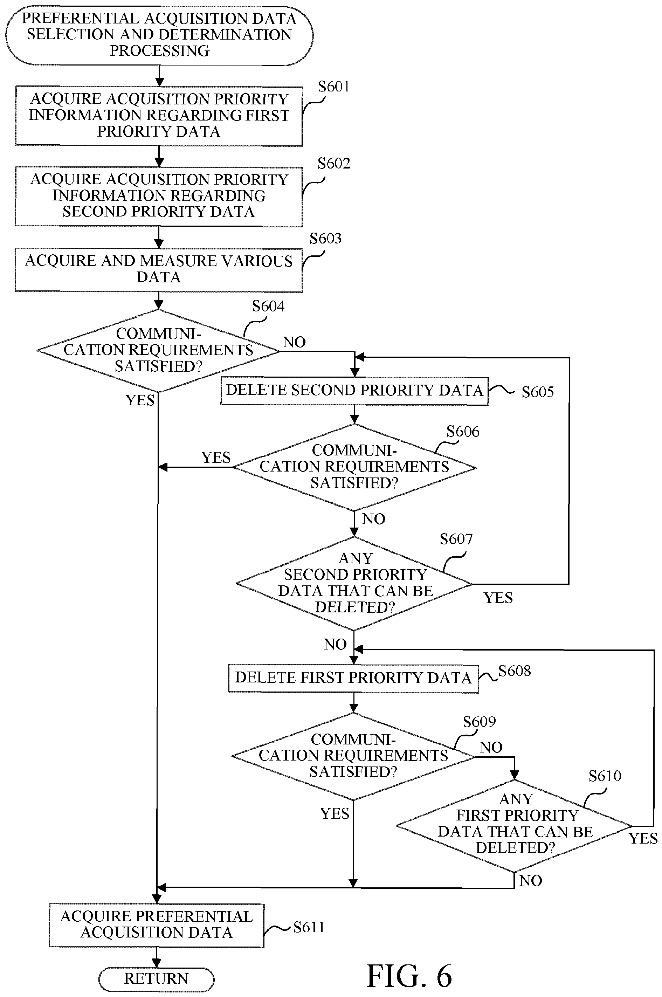

FIG. 6 is a flowchart illustrating the preferential acquisition data selection and determination processing executed in step S307 of FIG. 3.

In step S601, the camera system control unit 212 acquires acquisition priority information regarding the first priority data.

In step S602, the camera system control unit 212 acquires acquisition priority information regarding the second priority data.

In step S603, the camera system control unit 212 first executes, among the communications for acquiring information included in the acquisition priority information about the first and second priority data, the communication included in the communication information usable in the lens communication and the communication for acquiring essential acquisition data. In this embodiment, the camera system control unit 212 measures the time required for each communication. The measurement target may be the data size transmitted and received in the communication, in addition to the time required for communication.

In step S604, the camera system control unit 212 determines whether or not the series of communications executed in step S603 satisfies the communication requirements (predetermined conditions). In this embodiment, the determination is made based on whether or not the time required for the series of communications executed in step S603 (communication required time) is within the display time per frame of a video signal output from the video signal processing unit 205 or a video signal recorded in the recorder 207 (within a predetermined time). However, this embodiment is not limited to this example. For example, it may be determined whether the data size of the series of communications executed in step S603 is within the data size that can be transmitted and received within the display time per frame (within a predetermined amount). In that case, it is not necessary to measure the time required for each communication in step S603. In a case where it is determined whether the communication requirements are satisfied based on the data size as described above and each communication is not executed for the purpose other than measuring the time required for each communication in step S603, step S603 may be omitted. In a case where step S603 is omitted, a part of the communication executed in step S603 may be replaced with the communication to be executed in the following description. In a case where the camera system control unit 212 determines that the series of communications executed in step S603 satisfies the communication requirements, it executes the processing of step S611. In step S611, the camera system control unit 212 determines all the communications executed in step S603 as preferential acquisition data among the data included in the acquisition priority of the first priority data and the acquisition priority of the second priority data (preferential acquisition expected data hereinafter). On the other hand, in a case where the camera system control unit 212 determines that the series of communications executed in step S603 does not satisfy the communication requirements, it executes the processing of step S605.

In step S605, the camera system control unit 212 deletes one of the data included in the second priority data from the series of communications executed in step S603, in ascending order of priority, and recalculates the time required for the series of communications.

In step S606, the camera system control unit 212 determines whether or not the series of communications executed in step S605 satisfies the communication requirements. In a case where the camera system control unit 212 determines that the series of communications executed in step S605 satisfies the communication requirements, it executes the processing of step S611. In step S611, the camera system control unit 212 determines the communications executed in step S605 as preferential acquisition data among the preferential acquisition expected data other than the data deleted in step S605. On the other hand, in a case where the camera system control unit 212 determines that the series of communications executed in step S605 does not satisfy the communication requirements, it executes the processing of step S607.

In step S607, the camera system control unit 212 determines whether or not there is any second priority data that can be deleted. In a case where the camera system control unit 212 determines that there is second priority data that can be deleted, it executes the processing of step S605, and otherwise, it executes the processing of step S608. That is, the processing of steps S605 to S607 is repeated until the communication requirements are met or there is no more second priority data that can be deleted.

In step S608, the camera system control unit 212 deletes one communication corresponding to the data included in the first priority data from the series of communications executed in step S603, in ascending order of acquisition priority, and recalculates the time required for the series of communications.

In step S609, the camera system control unit 212 determines whether the series of communications executed in step S608 satisfies the communication requirements. In a case where the camera system control unit 212 determines that the series of communications executed in step S608 satisfies the communication requirements, it executes the processing of step S611. In step S611, the camera system control unit 212 determines the communications performed in step S608 as preferential acquisition data among all the second priority data and the preferential acquisition expected data other than the data deleted in step S608. On the other hand, in a case where the camera system control unit 212 determines that the series of communications executed in step S608 does not satisfy the communication requirements, it executes the processing of step S610.

In step S610, the camera system control unit 212 determines whether or not there is any first priority data that can be deleted. In a case where the camera system control unit 212 determines that there is first priority data that can be deleted, it executes the processing of step S608. On the other hand, in a case where the camera system control unit 212 determines that there is no first priority data that can be deleted, it determines that there is no data to be determined as preferential acquisition data in step S611. That is, the camera system control unit 212 repeats the processing from step S608 to step S610 until the communication requirements are satisfied or first priority data that can be deleted does not exist.

The order in which data is communicated may be set according to the priority described above for the preferential acquisition data selection and determination processing executed in step S307 of FIG. 3. For example, in the lens communication, the communication of essential acquisition data may be performed first, and then the communications of first priority data and second priority data may be performed. In a case where a plurality of data are to be communicated as the first priority data, data with a higher priority may be communicated first. Alternatively, in a case where a plurality of data are to be communicated as the second priority data, data with a higher priority may be communicated first.

In a case where the priority of the first priority data is lowered, the priority of the first priority data may be made lower than that of the second priority data. For example, in a case where there is no need to communicate specific data included in the first priority data in a case where the camera system 1 satisfies a predetermined condition, the priority of the specific data may be made lower than that of the second priority data so that the second priority data can be easily communicated. In a case where a period during which the second priority data is not communicated becomes longer than a predetermined period, the second priority data may be temporarily preferentially communicated over at least one of the essential acquisition data and the first priority data. For example, the flow of FIG. 6 may include, just before step S611, a step of determining whether or not a period during which the deleted second priority data is not communicated is longer than a predetermined period, and in a case where it is longer than the predetermined period, the priority of the deleted second priority data may be increased and the flow may proceed to step S611. In that case, the second priority data that is to be given a higher priority may be given a higher priority so that it can be replaced with the second priority data that is expected to be communicated, or a special priority may be set that is higher than the priority of the first priority data.

As described above, information required for VFX can be communicated at a proper frequency. Data with a low priority can be communicated even if the acquisition frequency of the data with the low priority is reduced.

### OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)^{™}), a flash memory device, a memory card, and the like.

While the disclosure has described example embodiments, it is to be understood that the disclosure is not limited to the example embodiments. The scope of the following claims is to be accorded the broadest interpretation so as to encompass all such modifications and equivalent structures and functions.

This embodiment can provide an image pickup apparatus and a lens apparatus, each of which can communicate information required for VFX at a proper frequency.

## Claims

1. An image pickup apparatus (200) attachable to and detachable from an optical lens (100), and configured to acquire at least one of an image and a video, the image pickup apparatus comprising:
a communication unit (213) configured to transmit and receive data to and from the optical lens; and
a control unit (212) configured to set a priority of the data according to whether or not communication of the data satisfies a predetermined condition.

2. The image pickup apparatus according to claim 1, **characterized in that** the control unit is configured to set the priority according to a time required for communicating the data is within a predetermined time.

3. The image pickup apparatus according to claim 2, **characterized in that** the predetermined time is display time per frame of the video.

4. The image pickup apparatus according to any one of claims 1 to 3, **characterized in that** the control unit is configured to set the priority according to a size of the data being within a predetermined size.

5. The image pickup apparatus according to any one of claims 1 to 4, **characterized in that** the control unit is configured to determine whether the communication of the data according to the set priority satisfies the predetermined condition.

6. The image pickup apparatus according to any one of claims 1 to 5, **characterized in that** the control unit is configured to set a priority of data necessary to control the optical lens to a highest priority.

7. The image pickup apparatus according to any one of claims 1 to 6, **characterized in that** the data includes data that is used for correction according to an optical characteristic of the optical lens.

8. The image pickup apparatus according to any one of claims 1 to 7, **characterized in that** the control unit is configured to increase a priority of data that is used for a first correction involving a change in position coordinate in at least one of a width direction and a height direction of one of the image and the video, among corrections to be performed for one of the image and the video so that the priority of the data that is used for the first correction is higher than a priority of at least one of data that is not used for the first correction.

9. The image pickup apparatus according to claim 8, **characterized in that** the control unit is configured to increase a priority of data in which at least one of an amount and a rate of the change in position coordinate before and after the first correction is larger, among the data that is used for the first correction.

10. The image pickup apparatus according to any one of claims 1 to 9, **characterized in that** the control unit is configured to increase a priority of data that is used for a second correction involving a change in position coordinate in a vertical direction to one of the image and the video, among corrections to be performed for one of the image and the video so that the priority of the data that is used for the second correction is higher than a priority of at least one of data that is not used for the second correction.

11. The image pickup apparatus according to claim 10, **characterized in that** the control unit is configured to increase a priority of data in which at least one of an amount and a rate of the change in position coordinate before and after the second correction is larger, among the data that is used for the second correction.

12. The image pickup apparatus according to any one of claims 1 to 11, **characterized in that** the control unit is configured to increase a priority of data that is used for a third correction involving a brightness change of one of the image and the video, among corrections to be performed for one of the image and the video so that the priority of the data that is used for the third correction is higher than a priority of at least one of data that is not used for the third correction.

13. The image pickup apparatus according to claim 12, **characterized in that** the control unit is configured to increase a priority of data in which at least one of an amount and a rate of the brightness change before and after the third correction is larger, among the data that is used for the third correction.

14. The image pickup apparatus according to any one of claims 1 to 13, **characterized in that** the control unit is configured to increase a priority of data that is used for a fourth correction involving a color shift of one of the image and the video, among corrections to be performed for one of the image and the video so that the priority of the data that is used for the fourth correction is higher than a priority of at least one of data that is not used for the fourth correction.

15. The image pickup apparatus according to claim 14, **characterized in that** the control unit is configured to increase a priority of data in which at least one of an amount and a rate of the fourth correction is larger, among the data that is used for the fourth correction.

16. The image pickup apparatus according to claim 14, **characterized in that** the control unit is configured to increase a priority of data in which at least one of an amount and a rate of the fourth correction more significantly changes according to an image height, among the data that is used for the fourth correction.

17. The image pickup apparatus according to any one of claims 1 to 16, **characterized in that** the control unit is configured to determine that the communication of the data satisfies the predetermined condition before the communication unit executes repeated transmission and reception at a predetermined cycle.

18. The image pickup apparatus according to any one of claims 1 to 17, **characterized in that** the control unit is configured to determine that the communication of the data satisfies the predetermined condition when the optical lens is attached to the image pickup apparatus.

19. The image pickup apparatus according to any one of claims 1 to 18, **characterized in that** the control unit is configured to determine that the communication of the data satisfies the predetermined condition when a processing load of the image pickup apparatus varies.

20. The image pickup apparatus according to any one of claims 1 to 19, **characterized in that** the communication unit receives, at a predetermined cycle, the data whose communication satisfies the predetermined condition.

21. The image pickup apparatus according to claim 20, **characterized in that** the communication unit receives, at a period longer than the predetermined cycle, data whose communication does not satisfy the predetermined condition.

22. The image pickup apparatus according to any one of claims 1 to 21, further comprising a notification unit configured to notify a user of the data whose communication satisfies the predetermined condition.

23. The image pickup apparatus according to any one of claims 1 to 22, further comprising a notification unit configured to notify a user of data that is not included in the data whose communication satisfies the predetermined condition.

24. The image pickup apparatus according to any one of claims 1 to 23, **characterized in that** the control unit is configured to lower a priority of data that is used for correction involving a brightness change of one of the image and the video, or data that is used for correction to a color shift of one of the image and the video so that the priority of the data that is used for the correction involving the brightness change or the data for the correction to the color shift is lower than a priority of data that is used for correction involving a change in position coordinate in at least one of a width direction and a height direction of one of the image and the video, or data that is used for correction involving a change in position coordinate in a direction vertical to one of the image and the video.

25. The image pickup apparatus according to any one of claims 1 to 24, **characterized in that** the control unit is configured to lower a priority of data that is used for correction involving a change in position coordinate in a direction vertical to one of the image and the video so that the priority of the data that is used for the correction is lower than a priority of data that is used for correction involving a change in position coordinate in at least one of a width direction and a height direction of one of the image and the video.

26. The image pickup apparatus according to any one of claims 1 to 25, **characterized in that** the control unit is configured to lower a priority of data that is used for correction to a color shift of one of the image and the video so that the priority of the data that is used for the correction to the color shift is lower than a priority of data that is used for correction involving a brightness change of one of the image and the video.

27. The image pickup apparatus according to any one of claims 1 to 26, **characterized in that** the communication unit communicates according to the priority.

28. A lens apparatus (100) attachable to and detachable from an image pickup apparatus (200) configured to acquire at least one of an image and a video, the lens apparatus comprising:
a communication unit (112) configured to transmit and receive data to and from the image pickup apparatus; and
a control unit (111) configured to set a priority of the data according to whether or not communication of the data satisfies a predetermined condition.

29. A lens apparatus (100) attachable to and detachable from an image pickup apparatus (200) configured to acquire at least one of an image and a video, the lens apparatus comprising:
a communication unit (112) configured to transmit and receive data to and from the image pickup apparatus,
**characterized in that** the communication unit transmits data that is used for correction involving a change in position coordinate in a direction vertical to one of the image and the video acquired by the image pickup apparatus or a change in position coordinate in at least one of a width direction and a height direction performed for the one of the image and the video, in preference to data that is used for correction involving a brightness change or that is used for correction to a color shift performed for one of the image and the video.

30. A method for controlling an image pickup apparatus (200) attachable to and detachable from an optical lens (100) and configured to acquire at least one of an image and a video, the method comprising:
setting a priority of the data according to whether or not communication of the data satisfies a predetermined condition.

31. A method for controlling a lens apparatus (100) attachable to and detachable from an image pickup apparatus (200) configured to acquire at least one of an image and a video, the method comprising:
setting a priority of the data according to whether or not communication of the data satisfies a predetermined condition.

32. A method for controlling a lens apparatus (100) attachable to and detachable from an image pickup apparatus (200) configured to acquire at least one of an image and a video, the method comprising:
transmitting data that is used for correction involving a change in position coordinate in a direction vertical to one of the image and the video acquired by the image pickup apparatus or a change in position coordinate in at least one of a width direction and a height direction performed for the one of the image and the video, in preference to data that is used for correction involving a brightness change or that is used for correction to a color shift performed for one of the image and the video.
